(19) Europäisches Patentamt / European Patent Office / Office européen des brevets

(11) **EP 4 696 519 A1**

(12) **EUROPEAN PATENT APPLICATION**
published in accordance with Art. 153(4) EPC

(43) Date of publication:
**18.02.2026 Bulletin 2026/08**

(21) Application number: **24811043.9**

(22) Date of filing: **17.05.2024**

(51) International Patent Classification (IPC):
**B41M 5/00** *(2006.01)*    **B41J 2/01** *(2006.01)*
**B41J 2/21** *(2006.01)*    **C09D 11/322** *(2014.01)*
**C09D 11/54** *(2014.01)*

(52) Cooperative Patent Classification (CPC):
**B41J 2/01; B41J 2/21; B41M 5/00; C09D 11/322;
C09D 11/54**

(86) International application number:
**PCT/JP2024/018255**

(87) International publication number:
**WO 2024/242036 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023   JP 2023084008
08.04.2024   JP 2024062310**

(71) Applicant: **CANON KABUSHIKI KAISHA
Ohta-ku
Tokyo 146-8501 (JP)**

(72) Inventors:
- **TAYA, Akihiro
  Tokyo 146-8501 (JP)**
- **MARUYAMA, Akio
  Tokyo 146-8501 (JP)**
- **KAWAMURA, Hidetaka
  Tokyo 146-8501 (JP)**

- **HASEGAWA, Waka
  Tokyo 146-8501 (JP)**
- **YAMABI, Satoshi
  Tokyo 146-8501 (JP)**
- **WATANABE, Taiki
  Tokyo 146-8501 (JP)**
- **KATSUMOTO, Yuko
  Tokyo 146-8501 (JP)**
- **HIGUCHI, Kanako
  Tokyo 146-8501 (JP)**
- **KASHIWAZAKI, Akio
  Tokyo 146-8501 (JP)**
- **ITO, Junji
  Tokyo 146-8501 (JP)**
- **ASAKAWA, Hiroshi
  Tokyo 146-8501 (JP)**
- **KAJI, Mamiko
  Tokyo 146-8501 (JP)**

(74) Representative: **WESER & Kollegen
Patentanwälte PartmbB
Radeckestraße 43
81245 München (DE)**

(54) **INKJET RECORDING METHOD, INKJET RECORDING DEVICE, AND AQUEOUS INK**

(57)    An ink jet recording method records an image on a recording medium using an aqueous ink containing a particle and a first resin particle. The method includes an ink application step of applying an aqueous ink to a recording medium and a heating step of heating the recording medium applied with the aqueous ink to a temperature that is equal to or higher than the glass transition temperature Tg (°C) or melting point $T_M$ (°C) of the first resin particle and is less than the glass transition temperature Tg (°C) or melting point $T_M$ (°C) of the particle. The particle has an average primary particle size $D_{P0}$ (nm) of 150 nm or less, and in the heating step, the recording medium is heated to melt the first resin particle and to generate holes.

FIG. 2

**Description**

Technical Field

The present invention relates to an ink jet recording method, an ink jet recording apparatus and an aqueous ink.

Background Art

In recent years, in the fields of commercial printing and so on, white images are sometimes recorded on recording media other than white such as a transparent film, a semitransparent film and colored paper. Inks for recording white images contain white pigments such as titanium oxide from the viewpoint of stability and cost of the materials.
However, the specific gravity of titanium oxide is larger than those of materials that are used in inks other white. Accordingly, the specific gravity difference from the solvent also increases, and there is a disadvantage that titanium oxide tends to settle in the ink. In particular, in order to enhance the concealing property and whiteness of images to be recorded, if titanium oxide having a larger particle size is used or the content of titanium oxide is increased, titanium oxide further tends to settle. As an ink that can record images with excellent whiteness and can be easily redispersed even if the pigment settled, a white ink containing rutile-type titanium oxide having an average particle size of 300 nm or more and a urethane resin has been proposed (PTL 1).

Citation List

Patent Literature

PTL 1: Japanese Patent Laid-Open No. 2013-60513

Summary of Invention

Technical Problem

The settling velocity V of a particle in an ink can be calculated by the following formula (A) (Stokes' equation):

$$V = \{g(\rho_s - \rho)d^2\}/18\mu \quad (A)$$

d: particle size,
g: gravitational acceleration,
$\rho_s$: density of particle,
$\rho$: density of dispersive medium,
$\mu$: viscosity of dispersive medium.

According to the Stokes' equation, it is demonstrated that the settling velocity V increases in proportion to the square of the particle size, that is, the larger the particle size, the easier the particle will settle. The rutile-type titanium oxide has a specific gravity larger than those of other common materials that are used in inks, and the settling velocity is high. Consequently, in the white ink proposed in PTL 1, titanium oxide that is used as a pigment tends to relatively settle.
In contrast, in images recorded by an ink containing titanium oxide having a small particle size, visible light easily penetrates without being scattered. Consequently, the scattering intensity sharply decreases, and the contrast ratio of an image tends to decrease. That is, it can be said that the settling velocity of a particle and the contrast ratio of a recorded image are in a trade-off relationship.
Accordingly, it is an object of the present invention to provide an ink jet recording method that can record an image with an excellent concealing property while using an aqueous ink with excellent settlement resistance. Another object of the present invention is to provide an ink jet recording apparatus and an aqueous ink that are used in this ink jet recording method.

Solution to Problem

That is, according to the present invention, provided is an ink jet recording method of recording an image on a recording medium using an aqueous ink containing a particle and a first resin particle, the method comprising an ink application step of applying the aqueous ink to the recording medium and a heating step of heating the recording medium applied with the aqueous ink to a temperature that is equal to or higher than the glass transition temperature Tg (°C) or melting point $T_M$ (°C) of the first resin particle and is less than the glass transition temperature Tg (°C) or melting point $T_M$ (°C) of the particle, wherein the particle has an average primary particle size $D_{P0}$ (nm) of 150 nm or less, and in the heating step, the recording medium is heated to melt the first resin particle and to generate a hole.

Advantageous Effects of Invention

According to the present invention, it is possible to provide an ink jet recording method that can record an image with an excellent concealing property while using an aqueous ink having excellent settlement resistance. In addition, according to the present invention, it is possible to provide an ink jet recording apparatus and an aqueous ink that are used in this ink jet recording method.

Brief Description of Drawings

[Fig. 1] Fig. 1 is a schematic view illustrating an example of an image-forming process.
[Fig. 2] Fig. 2 is a schematic view illustrating an example of an image-forming process.
[Fig. 3] Fig. 3 is an oblique view schematically showing an embodiment of an ink jet recording apparatus of the present invention.
[Fig. 4] Fig. 4 is a side view schematically showing an embodiment of an ink jet recording apparatus of the present invention.

Description of Embodiments

The present invention will now be described in more detail with reference to preferred embodiments. In the present invention, when a compound is a salt, the salt exists as a dissociated ion in the ink, but for convenience, it is expressed as "containing a salt". In addition, an aqueous ink for ink jet and an aqueous reaction liquid may be simply mentioned as "ink" and "reaction liquid". Physical property values are those at ordinary temperature (25°C) unless otherwise specified.

The present inventors investigated an ink jet recording method that can record images with excellent concealing properties while using an ink having excellent settlement resistance. As a result, it was found that images with excellent concealing properties can be recorded while using an ink having excellent settlement resistance by satisfying the following requirements (i) to (iv), and the present invention was accomplished:

(i) the method includes an ink application step of applying an ink to a recording medium and a heating step of heating the recording medium applied with the ink to a temperature that is equal to or higher than the glass transition temperature Tg (°C) or melting point $T_M$ (°C) of a first resin particle and is less than the glass transition temperature Tg (°C) or melting point $T_M$ (°C) of a particle;
(ii) the ink contains the particle and the first resin particle;
(iii) the particle has an average primary particle size $D_{P0}$ (nm) of 150 nm or less; and
(iv) in the heating step, the recording medium is heated to melt the first resin particle and generate holes.

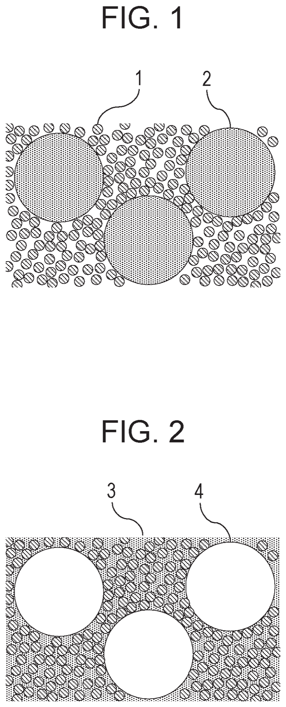

Figs. 1 and 2 are schematic views illustrating an example of an image-forming process. An ink is applied to a recording medium, and then as shown in Fig. 1, volatile components such as water and a water-soluble organic solvent evaporate, and the ink dries to form an ink film in which a particle 1 and a first resin particle 2 in the ink are densely packed. Subsequently, the recording medium is heated to a temperature (a temperature equal to or higher than the glass transition temperature Tg (°C) or melting point $T_M$ (°C) of the first resin particle) at which the first resin particle 2 melts, and then as shown in Fig. 2, the resin generated by the melting of the first resin particle 2 infiltrates into voids between individual particles 1. Along with that, a hole 4 is formed at the portion where the first resin particle 2 was previously present. Since the heating temperature on this occasion is less than the glass transition temperature Tg (°C) or melting point $T_M$ (°C) of the particle, the particle 1 is inferred not to melt. The resin infiltrates into the voids between individual particles 1 to form a binder 3 made of a mixture of the particle 1 and the resin. Here, since the average primary particle size $D_{P0}$ (nm) of the particle 1 is 150 nm or less, visible light is hardly scattered by the particle 1. However, air with a low refractive index is present in the hole 4 formed by melting of the first resin particle. Consequently, it is assumed that the refractive index of the hole 4 is relatively low compared to the refractive index of the binder 3. Under such a condition, incident light can scatter due to the refractive index difference between the binder 3 and the hole 4. Accordingly, an image with a high concealing property can be recorded without requiring use of a component that easily settles, such as titanium oxide having a large particle size. As described above, it is necessary to melt the first resin particle by the heating step. Accordingly, when only a drying step of evaporating the solvent (liquid component) on the surface of the recording medium is performed after the image recording or when the heating in the heating step is performed at a temperature less than the temperature at which the first resin particle melts, the first resin particle is inferred not to melt. As a result, scattering due to the refractive index difference between the binder 3 and the hole 4 does not occur, and an image with a high concealing property cannot be recorded. In contrast, when the heating in the heating step is performed at a temperature equal to or higher than the temperature at which the particle melts, not only the first resin particle and but also the particle melt, the hole is not formed. As a result, the above-described scattering does not occur, and an image with a high concealing property cannot be recorded.

As shown by the Stokes' equation (formula (A)), the smaller the particle size, the slower the settling velocity. Consequently, the settling velocity is decreased by using a particle having a relatively small particle size, i.e., an average primary particle size $D_{P0}$ (nm) of 150 nm or less, and an ink having excellent settlement resistance can be obtained. The details of the average primary particle size will be described later. If the $D_{P0}$ (nm) is more than 150 nm, since visible light tends to scatter, the concealing property is improved. In contrast, as shown by the Stokes' equation, the settling velocity is increased, and the settlement resistance is not obtained. If the particle is enlarged, when an image is formed, it is difficult to achieve a state. in which the first resin particle is uniformly distributed around the particle as shown in Fig. 1, and an image with a high concealing property cannot be recorded.

<Ink jet recording method, ink jet recording apparatus, and aqueous ink>

The ink jet recording method of the present invention is a method of recording an image by discharging an aqueous ink from the recording head of an ink jet system to apply the ink to a recording medium. The ink jet recording method of the present invention includes an ink application step of applying an ink to a recording medium and a heating step of heating the recording medium applied with the aqueous ink to a predetermined temperature. In the heating step, the recording medium is heated to a temperature that is equal to or higher than the glass transition temperature Tg (°C) or melting point $T_M$ (°C) of the first resin particle and is less than the glass transition temperature Tg (°C) or melting point $T_M$ (°C) of the particle. The aqueous ink contains the particle and the first resin particle, and the particle has an average primary particle size $D_{P0}$ (nm) of 150 nm or less. In the heating step, the recording medium is heated to melt the first resin particle and to generate a hole.

The ink jet recording apparatus of the present invention is an apparatus that is used in an ink jet recording method that records an image by discharging an aqueous ink from the recording head of an ink jet system to apply the ink to a recording medium and is an apparatus that is suitably used for the above-described recording method. In the present invention, there is no need to cure the image by irradiation with active energy rays or the like.

The aqueous ink of the present invention is an ink that is used for an ink jet recording method of recording an image by discharging an aqueous ink from the recording head of an ink jet system and applying the ink to a recording medium and is an ink that is suitably used for the above-described recording method.

The ink jet recording method and the ink jet recording apparatus (hereinafter, also simply mentioned as "recording method and recording apparatus") of the present invention will now be described in detail.

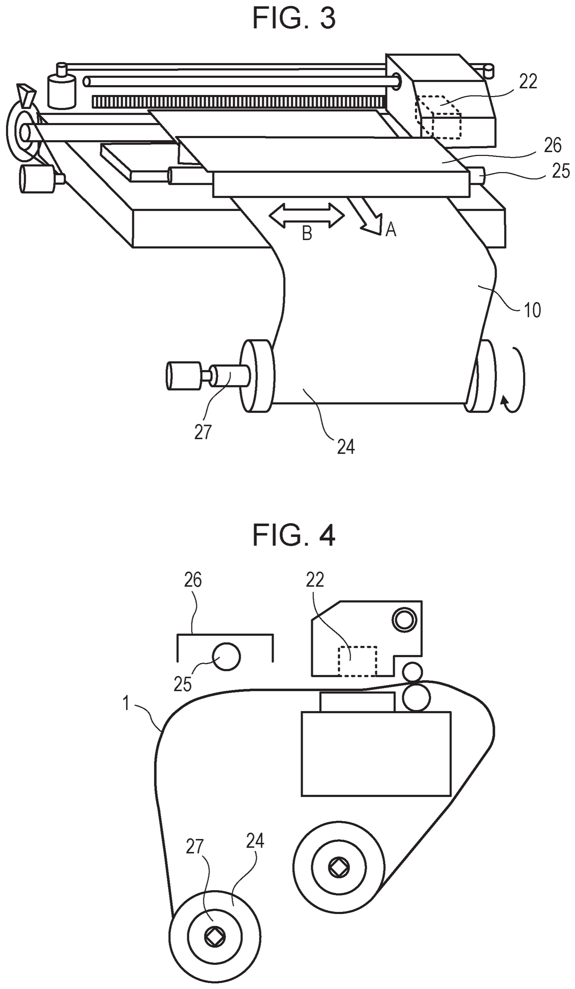

Fig. 3 is an oblique view schematically showing an embodiment of the ink jet recording apparatus of the present invention. Fig. 4 is a side view schematically showing an embodiment of the ink jet recording apparatus of the present invention. The recording apparatus of the embodiment shown in Figs. 3 and 4 includes a recording head 22 of an ink jet system for discharging an ink. The recording head 22 is a recording head that ejects an ink by the action of thermal energy. The recording head that ejects an ink by the action of thermal energy is a recording head of a thermal system that applies thermal energy to the ink by adding an electric pulse to the electrothermal conversion element to allow the ink to eject from an ejection orifice. Here, a recording head that ejects an ink by the action of thermal energy was taken as an example, but a recording head that ejects an ink by an action of mechanical energy may be adopted. The recording head may include a mechanism of heating the aqueous ink that is ejected from the recording head (temperature control mechanism). When a temperature control mechanism is included, the temperature of the ink to be ejected from the recording head is preferably controlled to 35°C or more to 70°C or less.

The application of an ink to a unit region of a recording medium is preferably multipath recording that performs relative scan of the recording head and the recording medium for a plurality of times. In particular, it is preferable that application of a white ink and application of a color ink to a unit region are performed by different relative scan. Consequently, the time it takes for inks to come into contact with each other increases, and mixing tends to be suppressed. The unit region can be set as an arbitrary region of 1 pixel, 1 band or the like.

(Heating step)

The recording method of the present invention includes a heating step of heating the recording medium applied with an ink (heating treatment). In the heating step, the recording medium applied with an ink is heated to melt the first resin particle in the ink. Consequently, an image including holes generated by the melting can be fixed to the recording medium. The volatile component (solvent) such as water and a water-soluble organic solvent in the ink evaporates by heating the recording medium applied with the ink to form an ink film in which the particle and the first resin particle that are solid contents dispersed in the ink are densely packed. Subsequently, the heated first resin particle melts to form holes, and also the resin generated by the melting of the first resin particle infiltrates into the voids between the individual particles. Consequently, a binder that is a mixture of the particle and the resin is formed, and an image including holes therein can be fixed to the recording medium.

In the heating step, the recording medium is heated to a temperature that is equal to or higher than the glass transition temperature or melting point of the first resin particle and is less than the glass transition temperature Tg (°C) or melting point $T_M$ (°C) of the particle for melting the first resin particle in the ink. That is, the heating temperature $T_H$ can be appropriately set depending on the glass transition temperature Tg or melting point $T_M$ of the first resin particle and the glass transition temperature Tg (°C) or melting point $T_M$ (°C) of the particle. Here, the first resin particle made of a crystalline resin has Tg and $T_M$, and in such a case, the heating temperature is equal to or higher than the temperature of $T_M$. The details of the crystalline resin will be described later. Specifically, the heating temperature $T_H$ (°C) in the heating step is preferably 70°C or more, further preferably 80°C or more, and particularly preferably 90°C or more. The upper limit of the heating temperature is not particularly limited, but is preferably 200°C or less from the viewpoint of the heat-resistance temperature of the recording medium. The heating temperature $T_H$ means the maximum temperature of the recording medium surface during the heating step. Alternatively, it may be rephrased as the set temperature of a heating means. The heating temperature $T_H$ can be measured using, for example, a contact thermometer that brings a thermocouple or the like into contact with the surface of a recording medium or a non-contact infrared thermometer. In EXAMPLEs of the present invention, the temperature at the surface of a recording medium was measured at a position of 10 cm vertically above the surface of the recording medium using a non-contact infrared thermometer digital radiation temperature sensor FT-H20 (manufactured by Keyence Corporation).

The first resin particle is melted by performing the heating step to generate holes, and as a result, an image including holes can be recorded. The heating step may be performed once or a plurality of times. Examples of the means for heating the recording medium include known heating means such as a heater, an air blowing means using blowing of air such as a drier and a means in combination thereof. Examples of the heating means include the above-mentioned heating means, the air blowing means and a means in combination thereof. Examples of the method of heating treatment include a method of providing heat from the opposite side (back surface) of the recording surface (ink-applying surface) of the recording medium, a method of applying warm or hot air to the recording surface of the recording medium and a method of heating the recording surface or the back surface with an infrared heater. Alternatively, a combination of two or more of these methods may be adopted. Furthermore, heating may be performed by bringing a heated member into contact with the recording surface or back surface of the recording medium. The time for the heating step is not particularly limited as long as the first resin particle can be melted. For example, when the heating step is performed by air blowing, the temperature of the air can be 80°C or more to 120°C or less.

In the recording apparatus shown in Figs. 3 and 4, a heater 25, which is supported by a frame (not shown), is disposed at a position downstream than the position where the recording head 22 scans back and forth in the main scan direction B in the sub-scan direction A. The recording medium 10 applied with an ink can be heated by the heater 25. Examples of the heater 25 include a sheath heater and a halogen heater. The heater 25 is covered by a heater cover 26. The heater cover 26 is a member for efficiently irradiating the recording medium 10 with the heat generated by the heater 25. Furthermore, the heater cover 26 is also a member for protecting the heater 25. The recording medium 10 applied with the ink ejected from the recording head 22 is wound by a winding spool 27 to form a medium 24 wound into a roll.

It is preferable to further include, prior to the heating step, as shown in Fig. 1, a step of forming an ink film in which the particle and the first resin particle are densely packed. By providing such a step, the melted first resin particle can be allowed to more certainly infiltrate into the voids between the individual particles, and the image can more easily include holes as shown in Fig. 2. That is, the ink jet recording method preferably further includes at least one step selected from the group consisting of a reaction liquid application step of applying an aqueous reaction liquid containing a reactant that reacts with the ink to the recording medium and a drying step of drying the liquid component on the recording medium. It is further preferable to perform both these steps (reaction liquid application step and drying step). When these steps are adopted in combination, it is particularly preferable to perform the drying step after the reaction liquid application step. That is, the reaction liquid application step, the ink application step, the drying step, and the heating step are preferably performed in this order. The ink application may be performed simultaneously with the application of the reaction liquid. The particle and the first resin particle in the ink can be aggregated and densely packed by applying the reaction liquid to the recording medium. The details of the reaction liquid will be described later. When air is blown toward the recording medium, from the viewpoint of drying efficiency, air is preferably blown toward the surface (recording surface) of the recording medium.

The drying step can be performed for drying the liquid component (solvent) on the surface of the recording medium. Here, in the drying step, the liquid component need not be completely dried. Although the liquid component on a recording medium gradually dries without going through the above step, the drying is accelerated by performing the drying step, and the state shown in Fig. 1 can be efficiently achieved. The drying step may be performed once or a plurality of times. In the drying step, the same heating means as that in the heating step can be used. In particular, air blowing is preferable from the viewpoint of efficiently drying the liquid component.

Since the drying step is performed in a state in which the solvent remains on the surface of the recording medium and the viscosity is not sufficiently increased, from the viewpoint of suppressing the difficulty of achieving the state shown in Fig. 1, it is preferable that the thermal energy that is applied to the recording medium is not too large. Specifically, it is preferable that the heating temperature and the heating time are not too large. For example, when drying is performed by air blowing, considering the transport speed and the environmental temperature, the temperature of the air blowing means (such as hot air) can be set such that the recording medium is heated to a desired temperature. Specifically, the temperature of air that is blown by the air blowing means (such as hot air) is preferably set to 60°C or less and further preferably 30°C or less. The temperature of air may be ordinary temperature (25°C). Here, as shown in Fig. 1, in order to achieve a dense state of the particle and the first resin particle by decreasing the liquid component without melting the first resin particle, heating at a temperature lower than the Tg or $T_M$ of the first resin particle is preferable. The air velocity is preferably 1 m/s or more to 100 m/s or less. The temperature of air, such as hot air, can be measured using a K-type thermocouple thermometer. As a specific thermometer, for example, trade name "AD-5605H" (manufactured by A&D Co., Ltd.) can be used. As needed, air may be applied to the back surface of a recording medium, but it is preferable to apply air to the front surface (to which an ink is applied) of the recording medium. The distance from the air-blowing device to the recording medium is preferably 5 mm or more to 50 mm or less.

(Recording medium)

The type of the recording medium on which an image is recorded is not particularly limited, and any recording medium may be used. In particular, since an ink that can record an image of white excellent in the concealing property is used, a recording medium other than white, such as a transparent film, a semitransparent film and colored paper are preferably used. That is, the recording medium is preferably a non-absorptive recording medium. Here, a non-absorptive recording medium (low to non-absorptive recording medium) is a recording medium of which the water absorption amount from the start of contact to 30 $msec^{1/2}$ is 0 $mL/m^2$ or more to 10 $mL/m^2$ or less in a Bristow method. The Bristow method is described in "Paper and Paperboard Liquid Absorbency Test Method" of JAPAN TAPPI Paper and Pulp Test Method No. 51. A recording medium (such as glossy paper and matte paper) for ink jet recording including a coat layer (ink-receiving layer) formed of an inorganic particle and plain paper not having a coat layer are "absorptive recording media" having a water absorption amount of more than 10 $mL/m^2$.

As a low to non-absorptive recording medium, for example, a plastic film; a recording medium including a plastic film adhering to the recording surface of a base material; and a recording medium provided with a resin coat layer on the recording surface of a base material containing cellulose pulp can be used. In particular, a plastic film is preferable, and a recording medium provided with a resin coat layer on the recording surface of a base material containing cellulose pulp is also preferable. The recording medium in the present specification means an objective recording medium on which an image as a recorded matter is recorded, not a transcript.

(Aqueous ink)

The ink that is used in the recording method of the present invention is an aqueous ink for ink jet containing a particle and a first resin particle. In particular, the ink is preferably a white ink. As the white ink, an ink that does not have a white color in the ink state but can record (form) a white image is also included. The white color means a color having a brightness (L*) and chromaticities (a*, b*) in ranges of 70 ≤ L* ≤ 100, -4.5 ≤ a* ≤ 2 and -6 ≤ b* ≤ 2.5, respectively. The components constituting the ink and so on will be described in detail below.

[Particle]

The ink contains a particle. This particle may be a color material or may be a material that does not have a color such as a resin particle. In particular, since a white image is recorded, a colorless or white particle is preferably used. The content (% by volume) of the particle in the ink is preferably 1.5% by volume or more based on the total volume of the ink. If the content of the particle is less than 1.5% by volume, voids sufficient for infiltration are not formed when the first resin particle described later is melted, and the image may not have a sufficient concealing property. The content of the particle in the ink is preferably 5.0% by volume or less.

The particle is usually in a secondary aggregate state generated by aggregation of two or more primary particles and is dispersed in an ink. The particle contained in the ink preferably has an average primary particle size $D_{P0}$ (nm) of 150 nm or less, preferably 50 nm or less. The lower limit of the average primary particle size $D_{P0}$ (nm) of the particle is not particularly limited, but is preferably 5 nm or more. The particle size of the primary particle of the particle can be measured by observation of the particle using a scanning electron microscope. The average primary particle size of the particle can be calculated as the average of particle sizes of a plurality of primary particles (for example, 100 individual particles).

The volume-based cumulative 50% particle size $D_P$ (nm) of the particle is preferably 150 nm or less, and further preferably 5 nm or more to 100 nm or less. It is possible to suppress light scattering and increase light transmission by using a particle having a volume-based cumulative 50% particle size in the above range, and the settling velocity can be further decreased.

The "volume-based cumulative 50% particle size ($D_{50}$)" in the present specification is the diameter of a particle corresponding to 50% accumulation from the smallest particle size side based on the total volume of measured particles in a particle size accumulation curve, and can be measured using a particle size distribution analyzer by dynamic light scattering. Examples of the measuring conditions include SetZero: 30 seconds, number of measurements: three times, measurement time: 180 seconds and shape: nonspherical. As the particle size distribution analyzer, for example, a particle size analyzer (e.g., trade name: "UPA-EX150", manufactured by Nikkiso Co., Ltd.) by dynamic light scattering can be used. The particle size distribution analyzer to be used and the measurement conditions are of cause not limited to the above.

The particle is required not to melt in the heating step for melting the first resin particle. Specifically, the glass transition temperature Tg or melting point $T_M$ of the particle is equal to or higher than the temperature of the recording medium in the heating step and is preferably 200°C or more. The particle is preferably at least one selected from the group consisting of titanium oxide, calcium carbonate, calcium phosphate, barium sulfate, zirconium oxide, silicon dioxide, kaolin, clay and a second resin particle. The details of the second resin particle will be described later.

From the viewpoint of forming a binder with a high refractive index, titanium oxide having a relatively high refractive index is preferably used as the particle. The titanium oxide preferably has a refractive index of 2.1 or more and further preferably 2.5 or more to 2.8 or less. The surface of titanium oxide may be coated with alumina or zirconia. The surface of titanium oxide may be coated with an inorganic oxide such as silica, zinc oxide and zirconia; or an organic material such as a polyol. Suppression of photocatalytic function and improvement of dispersibility are expected by using titanium oxide with a coated surface. Titanium oxide includes three crystalline types: rutile-type, anatase-type and brookite type. In particular, it is preferable to use rutile-type titanium oxide having a low photocatalytic function. Examples of industrial manufacturing method of the titanium oxide include a sulfuric acid method and a chlorine method. Titanium oxide manufactured by any manufacturing method can be used.

The content (% by mass) of titanium oxide in the ink is preferably 5.0% by mass or more to 45.0% by mass or less based on the total mass of the ink, and further preferably 7.0% by mass or more to 38.0% by mass or less. The average primary particle size $D_{P0}$ (nm) of titanium oxide contained in the ink is preferably 50 nm or less and further preferably 30 nm or less. The volume-based cumulative 50% particle size $D_P$ (nm) of titanium oxide is preferably 100 nm or less and further preferably 5 nm or more to 50 nm or less.

The particle shape of calcium carbonate is a cube or a spindle. In particular, it is preferable to use cubic calcium carbonate which has a uniform shape. Examples of calcium phosphate include first calcium phosphate ($Ca(H_2PO_4)_2$), second calcium phosphate ($CaHPO_4$) and third calcium phosphate ($Ca_3(PO)_2$). In particular, apatite-type calcium phosphate is preferable, and hydroxy apatite ($Ca_{10}(PO_6)(OH)_2$) is further preferable.

Barium sulfate is roughly divided into micronized barium sulfate and precipitated barium sulfate. The size of particle of the precipitated barium sulfate can be controlled by synthesis conditions, and barium sulfate with an appropriate particle size can be obtained. Zirconium oxide is also called zirconia and is known as ceramic having high toughness. Pure zirconia changes its crystalline structure depending on temperature changes, and the change also causes volume changes and thereby easily causes deterioration. Consequently, stabilized zirconia containing a stabilizer for suppressing volume changes can be used.

As the silicon dioxide, for example, silicon oxide synthesized by a Stober method can be used. The Stober method is a method of allowing a hydrolysis-polycondensation reaction of an alkoxysilane as a silica source to progress in a water-ethanol-ammonia aqueous solution. The particle size of the obtained spherical particle can be controlled by changing the concentration of each reactant.

Kaolin is a clay mineral containing multiple inorganic components. Specifically, kaolin is a clay consisting of kaolinite, hydrated halloysite and halloysite crystal structures. The clay includes, in addition to the kaolin components, illuminite, montmorillonite, vermiculite and so on. When the above particle is used, from the viewpoint of making a white ink, a particle with high whiteness is preferably used.

[Resin particle]

The ink contains a first resin particle. A close contact state of the particle and the first resin particle is formed by evaporation of the solvent in the ink applied to a recording medium. Then, the first resin particle is melted by the heating step to generate holes. The content (% by mass) of the first resin particle in the ink is preferably 2.5% by mass or more to 17.0% by mass or less based on the total mass of the ink and further preferably 2.5% by mass or more to 14.0% by mass or less. In addition, the content (% by volume) of the first resin particle in the ink is preferably 2.5% by volume or more to 17.0% by volume or less based on the total volume of the ink and further preferably 2.5% by volume or more to 14.0% by volume or less.

The size of the hole formed in the heating step roughly accords to the size (particle size) of the first resin particle. The size of the formed hole highly affects the efficiency of light scattering. Consequently, from the viewpoint of further increasing the efficiency of light scattering, the volume-based cumulative 50% particle size $D_E$ of the first resin particle is preferably 100 nm or more to 400 nm or less and further preferably 150 nm or more to 250 nm or less.

Whether the first resin particle has melted or not in the heating step can be easily determined by, for example, cutting the recording medium on which an image is recorded before and after the heating step and observing them with a scanning electron microscope or the like. Alternatively, the particle size of the first resin particle in an image before the heating step is measured, and when the difference between the hole size of the image after the heating step and the particle size of the first resin particle is small (e.g., within 10%), it can be judged that the first resin particle melted to generate the hole.

From the viewpoint of forming a binder with a high refractive index, a first resin particle with a higher refractive index is preferably used. Specifically, the refractive index of the first resin particle is preferably 1.5 or more and further preferably 1.6 or more to 2.5 or less.

In the ink, volume ratio of the content (% by volume) of the first resin particle to the content (% by volume) of the particle is preferably 1.3 times or more to 5.0 times or less, further preferably 2.0 times or more to 4.0 times or less. When the volume ratio is more than 5.0 times, the amount of fusion of individual first resin particles tends to increase, and the formation of holes with a desired size is difficult. As a result, the concealing property of the image may be insufficient. In addition, the refractive index of the binder constituted of the melted first resin particle and the particle may be small, and the efficiency of light scattering and the contrast ratio may tend to decrease. In contrast, when the above mass ratio is less than 1.3 times, the amount of formed holes decreases, an image with a sufficient contrast ratio may not be obtained.

When the particle is titanium oxide, mass ratio of the content (% by mass) of the first resin particle to the content (% by mass) of titanium oxide in the ink is preferably 0.30 times or more to 1.0 times or less , further preferably 0.40 times or more to 0.60 times or less.

The content (% by volume) of the first resin particle in the ink corresponds to the volume of the first resin particle occupying in the ink. Consequently, when the first resin particle includes a pore or an internal void, the volume of the first resin particle occupying in the ink is the value including the pore and the internal void. Since the first resin particle is directly replaced by a hole, the apparent density of the first resin particle is preferably 0.8 g/cm³ or more. If the apparent density is less than 0.8 g/cm³, it is difficult to generate a resin sufficient to fill the voids between individual particles, the refractive index of the binder is small, and the efficiency of light scattering and contrast ratio may be insufficient. The amount of the resin in the binder decreases, and the strength of the image may be insufficient.

The apparent density of the first resin particle can be measured according to, for example the following procedure. Firstly, 100-cm³ measuring flask is filled with about 30 cm³ of the first resin particle at a condition of 25°C, and the mass of the filling first resin particle is measured. Secondly, the measuring flask filled with the first resin particle is filled with isopropanol up to the marked line. The mass of isopropanol added to the measuring flask is precisely measured, and the apparent density (g/cm³) of the first resin particle can be calculated using the formula (X) below. In EXAMPLES described later, the apparent density of first resin particle was measured and calculated by the above method. Alternatively, the apparent density can also be measured using Le Chatelier pycnometer in accordance with JIS Z 8807.

$$\text{Apparent density (g/cm}^3\text{) of first resin particle} = A/ (100 - B) /C \qquad (X)$$

A: mass (g) of first resin particle;
B: mass (g) of isopropanol; and
C: specific gravity of isopropanol at 25°C.

Examples of the resin forming the first resin particle include a vinyl chloride resin, a styrene resin, a urethane resin, an acrylic resin and a polyester resin. In particular, from the viewpoint of ink jet characteristics, an acrylic resin, a polyester resin and a urethane resin are preferable. If a first resin particle formed of a resin other than the above resins is used, ejection tends to be unstable, and the resulting image may not have a sufficient concealing property. In particular, an acrylic resin is preferable, and an acrylic resin including a unit derived from styrene is further preferable. The details of the resin constituting the resin particle will be described later.

If the first resin particle melts before performing the heating step, mixing of the particle and the resin does not progress quickly, or individual first resin particles fuse to each other, and it may be slightly difficult to form a desired hole. When a desired hole is not formed, the efficiency of light scattering decreases, and the contrast ratio may tend to decrease.

Accordingly, a resin particle that does not substantially fuse at ordinary temperature (25°C) is preferably used. Specifically, it is preferable that (i) the first resin particle has a glass transition temperature Tg (°C) of 25°C or more or (ii) the first resin particle has a melting point $T_M$ (°C) of 25°C or more and that the resin constituting the first resin particle is a crystalline resin.

The upper limits of Tg and $T_M$ of the first resin particle are not particularly limited, but both are preferably 100°C or less and further preferably 80°C or less. The Tg and $T_M$ of the first resin particle can be measured using a differential scanning calorimeter (DSC).

The "resin particle" in the present specification means a resin that exists in an undissolved state in the aqueous medium of the ink and, more specifically, a resin that can exist in an aqueous medium in a form of a particle whose particle size can be measured by dynamic light scattering. In contrast, "water-soluble resin" means a resin that exists in a dissolved state in the aqueous medium of the ink.

Whether a certain resin corresponds to the "resin particle" or not can be judged according to the method shown below. A liquid containing a resin to be judged is provided and is diluted with pure water such that the content of the resin is about 1.0% to prepare a sample. When the particle size of a resin in a sample is measured by dynamic light scattering, if a particle having a particle size is detected, the resin is judged to be a "resin particle" (i.e., to be a "water dispersible resin"). In contrast, if a particle having a particle size is not detected, the resin is judged not to be a "resin particle" (i.e., to be a "water-soluble resin"). The measurement conditions on this occasion can be, for example, SetZero: 30 seconds, number of measurements: 10 times, measurement time: 120 seconds, shape: true-sphere, refractive index: 1.5 and density: 1.0.

As the particle size distribution analyzer, a particle size analyzer by dynamic light scattering (for example, trade name: "UPA-EX150", manufactured by Nikkiso Co., Ltd.) can be used. The particle size distribution analyzer to be used and the measurement conditions are of cause not limited to the above.

Whether the resin constituting the resin particle is an amorphous resin or a crystallin resin can be judged by measuring the degree of crystallinity with a differential scanning calorimeter. When a melting peak is not observed by a differential scanning calorimeter, it can be judged to be an amorphous resin. In contrast, when a melting peak is observed, it ca be judged to be a crystalline resin. When the resin is a crystalline resin, the degree of crystallinity can also be determined from the ratio of the heat of fusion determined from the peak area to the heat of fusion of a perfect crystal having a degree of crystallinity of 100% determined by theoretical calculation.

The acid value of the resin constituting the first resin particle is preferably 5 mg KOH/g or more to 100 mg KOH/g or less. The weight average molecular weight of the resin constituting the first resin particle is preferably 1,000 or more to 3,000,000 or less and further preferably 100,000 or more to 3,000,000 or less. The first resin particle need not to include a color material therein.

As described above, the first resin particle melts by heating, and the generated resin fills the void between individual particles. As a result, holes are generated. Consequently, the properties as an elastic body, in particular, loss elastic modulus relating to the viscosity, of the first resin particle affect the ease of generation of a hole. The resin generated by melting fills the void between individual particles and thereby generates a hole. Consequently, the properties as an elastic body, in particular, loss elastic modulus relating to the viscosity, of the first resin particle affects the ease of filling the voids, that is, the ease of generating a desired hole. Accordingly, the loss elastic modulus of the resin at high temperature is important. This loss elastic modulus varies depending on temperature. For example, the first resin particle preferably has a loss elastic modulus at 80°C of $1.0 \times 10^7$ Pa or less and further preferably $3.3 \times 10^5$ Pa or less.

As the particle, the above-mentioned second resin particle that has a glass transition temperature Tg (°C) or melting point $T_M$ (°C) higher than the glass transition temperature Tg (°C) or melting point $T_M$ (°C), respectively, of the first resin particle can be used. As the resin constituting the second resin particle, a resin that is the same as the resin constituting the above-described first resin particle can be used. In particular, the resin constituting the second resin particle is preferably cross-linked resin and further preferably a cross-linked acrylic resin.

[Resin]

The ink can further contain a resin (optional resin) other than the first resin particle. The content (% by mass) of the resin (the optional resin) in the ink is preferably 0.1% by mass or more to 20.0% by mass or less based on the total mass of the ink and further preferably 0.5% by mass or more to 15.0% by mass or less.

The resin can be added to the ink for (i) stabilization of the dispersion state of the pigment, that is, can be added to the ink as a resin dispersant or its assistance. In addition, the resin can be added to the ink for (ii) improvement of characteristics of the recorded image. Examples of the form of the resin include a block copolymer, a random copolymer, a graft copolymer and a combination thereof. The resin is preferably a water-soluble resin that can be dissolved in an aqueous medium.

[Composition of resin]

Examples of the resin include an acrylic resin, a urethane resin and an olefin resin. In particular, an acrylic resin and a urethane resin are preferable, and an acrylic resin constituted of a unit derived from (meth)acrylic acid or a (meth) acrylate is further preferable.

The acrylic resin preferably has a hydrophilic unit and a hydrophobic unit as constitutional units. In particular, the resin preferably includes a hydrophilic unit derived from (meth)acrylic acid and a hydrophobic unit derived from at least one selected from the group consisting of a monomer having an aromatic ring and a (meth)acrylic acid ester monomer. Particularly, a preferred resin includes a hydrophilic unit derived from (meth)acrylic acid and a hydrophobic acid derived from at least one monomer selected from the group consisting of styrene and α-methylstyrene. These resins tend to cause interaction with a pigment and thereby can be suitably used as a resin dispersant for dispersing a pigment.

The hydrophilic unit is a unit including a hydrophilic group such as an anionic group. The hydrophilic unit can be formed by, for example, polymerizing a hydrophilic monomer including a hydrophilic group. Examples of the hydrophilic monomer including a hydrophilic group include an acidic monomer including a carboxylic acid group such as (meth)acrylic acid, itaconic acid, maleic acid and fumaric acid; and an anionic monomer such as anhydrides and salts of these acidic monomers. Examples of the cation constituting a salt of an acidic monomer include ions of lithium, sodium, potassium, ammonium, organic ammonium and so on. The hydrophobic unit is a unit not including a hydrophilic group such as an anionic group. The hydrophobic unit can be formed by, for example, polymerizing a hydrophobic monomer not having a hydrophilic group such as an anionic group. Examples of the hydrophobic monomer include a monomer having an aromatic ring such as styrene, α-methylstyrene and benzyl (meth)acrylate; and a (meth)acrylic acid ester monomer such as methyl (meth)acrylate, butyl (meth)acrylate and 2-ethylhexyl (meth)acrylate.

The urethane resin can be obtained by, for example, reacting a polyisocyanate and a polyol. A chain extender may be further reacted. Examples of the olefin resin include polyethylene and polypropylene.

The polyester resin is usually constituted of a unit derived from a polyvalent alcohol and a unit derived from a polyvalent carboxylic acid. Examples of the polyvalent alcohol that gives the unit derived from a polyvalent alcohol constituting the polyester resin by the reaction include di- to tetra-valent polyvalent alcohols. Examples of the polyvalent alcohol include polyvalent alcohols including aliphatic groups, polyvalent alcohols including aromatic groups and sugar alcohols. Examples of the polyvalent alcohol include divalent alcohols such as ethylene glycol (1,2-ethanediol), neopentyl glycol (2,2-dimethyl-1,3-propanediol), 1,3-propanediol, 1,4-butanediol, benzenediol and 2,2-bis(4-hydroxyphenyl)propane (bisphenol A); trivalent alcohols such as glycerin, trimethylolethane and trimethylolpropane; and tetravalent alcohols such as pentaerythritol. As the polyvalent alcohol, an oligomer (a low-molecular polymer with a molecular weight of 1,000 or less) can also be used. Since the weight average molecular weight of a polyester resin can be easily adjusted, divalent or trivalent polyvalent alcohols are preferably used.

Examples of the polyvalent carboxylic acid that gives a unit derived from a polyvalent carboxylic acid constituting a polyester resin by a reaction include di- to tetra-valent polyvalent carboxylic acids. Examples of the structure of the polyvalent carboxylic acid include polyvalent carboxylic acids including aliphatic groups, polyvalent carboxylic acids including aromatic groups and nitrogen-containing polyvalent carboxylic acids. Examples of the polyvalent carboxylic acid include divalent carboxylic acids such as glutamic acid, adipic acid, terephthalic acid, isophthalic acid and 2,6-naphthalenedicarboxylic acid; trivalent carboxylic acid such as trimellitic acid; and tetravalent carboxylic acids such as ethylenediaminetetraacetic acid. As the polyvalent carboxylic acid, an oligomer (a low-molecular polymer with a molecular weight of 1,000 or less) can also be used. Since the weight average molecular weight and acid value of a polyester resin can be easily adjusted, divalent or trivalent polyvalent carboxylic acids are preferably used.

[Property of resin]

The acid value of the water-soluble resin is preferably 100 mg KOH/g or more to 250 mg KOH/g or less. The weight average molecular weight of the water-soluble resin is preferably 3,000 or more to 15,000 or less.

[Aqueous medium]

The ink that is used in the recording method of the present invention is an aqueous ink at least containing water as an aqueous medium. The ink can contain water or an aqueous medium that is a mixture solvent of water and a water-soluble organic solvent. As the water, deionized water or ion-exchanged water can be preferably used. The content (% by mass) of water in the ink is preferably 50.0% by mass or more to 95.0% by mass or less based on the total mass of the ink. The content (% by mass) of the water-soluble organic solvent in the ink is preferably 3.0% by mass or more to 50.0% by mass or less based on the total mass of the ink. As the water-soluble organic solvent, any of those that can be used in an ink for ink jet, such as alcohols, (poly)alkylene glycols, glycol ethers, nitrogen-containing compounds and sulfur-containing compounds, can be used.

[Other component]

The ink may further contain a water-soluble organic compound that is solid at 25°C, such as urea or its derivative, trimethylolpropane and trimethylolethane. The content (% by mass) of the water-soluble organic compound in the ink is preferably 0.1% by mass or more to 10.0% by mass or less based on the total mass of the ink. The ink may contain other components, in addition to the above components, as needed. Examples of the other component include various additives such as a surfactant, a defoaming agent, a pH adjuster, a viscosity modifier, a rust inhibitor, a preservative, an anti-fungal agent, an antioxidant and a reduction inhibitor. However, the ink preferably does not contain a reactant to be contained in the reaction liquid.

[Physical property of ink]

The ink is an aqueous ink that is applied to an ink jet system. Accordingly, from the viewpoint of reliability, it is preferable to appropriately control the physical property values. Specifically, the surface tension of the ink at 25°C is preferably 20 mN/m or more to 60 mN/m or less. The viscosity of the ink at 25°C is preferably 1.0 mPa·s or more to 10.0 mPa·s or less. The pH of the ink at 25°C is preferably 7.0 or more to 9.5 or less and further preferably 8.0 or more to 9.5 or less.

(Reaction liquid)

The recording method of the present invention preferably includes a reaction liquid application step of applying an aqueous reaction liquid containing a reactant that reacts with an aqueous ink to a recording medium. In particular, the reaction liquid application step is preferably performed prior to the ink application step or simultaneously with the ink application step. The components that are used in the reaction liquid will be described in detail below.

[Reactant]

The reaction liquid is brought into contact and reacts with the ink to aggregate the components (a resin and a component including an anionic group such as a self-dispersing pigment) in the ink and contains a reactant. Examples of the reactant include an organic acid, a polyvalent metal salt and a cationic resin.

Examples of the polyvalent metal ion include a divalent metal ion such as $Ca^{2+}$, $Cu^{2+}$, $Ni^{2+}$, $Mg^{2+}$, $Sr^{2+}$, $Ba^{2+}$ and $Zn^{2+}$; and a trivalent metal ion such as $Fe^{3+}$, $Cr^{3+}$, $Y^{3+}$ and $Al^{3+}$. In order to obtain a reaction liquid containing a polyvalent metal ion, a polyvalent metal salt (which may be a hydrate) constituted by bonding a polyvalent metal ion and an anion can be used. Examples of the anion include an inorganic anion such as $Cl^-$, $Br^-$, $I^-$, $ClO^-$, $ClO_2^-$, $ClO_3^-$, $ClO_4^-$, $NO_2^-$, $NO_3^-$, $SO_4^{2-}$, $CO_3^{2-}$, $HCO_3^-$, $PO_4^{3-}$, $HPO_4^{2-}$ and $H_2PO_4^-$; and an organic anion such as $HCOO^-$, $(COO-)_2$, $COOH(COO^-)$, $CH_3COO^-$, $C_2H_5COO^-$, $CH_3CH(OH)COO^-$, $C_2H_4(COO^-)_2$, $C_6H_5COO^-$, $C_6H_4(COO^-)_2$ and $CH_3SO_3^-$. When a polyvalent metal ion is used as the reactant, the content (% by mass) of the polyvalent metal ion in the reaction liquid in terms of its polyvalent metal salt is preferably 1.0% by mass or more to 20.0% by mass or less based on the total mass of the reaction liquid. In the present specification, the "content (% by mass) of the polyvalent metal salt" in the reaction liquid when the polyvalent metal salt is a hydrate means the "content (% by mass) of anhydrate of the polyvalent metal salt" excluding water as the hydrate.

The reaction liquid containing an organic acid has buffering ability in the acidic region (a pH of less than 7.0, preferably a pH of 2.0 to 5.0) and thereby efficiently making the anionic group of the component present in the ink an acid type to aggregate. Examples of the organic acid include monocarboxylic acid such as formic acid, acetic acid, propionic acid, butyric acid, benzoic acid, glycolic acid, lactic acid, salicylic acid, pyrrolecarboxylic acid, furancarboxylic acid, picolinic acid, nicotinic acid, thiophenecarboxylic acid, levulinic acid and coumaric acid, and salts thereof; dicarboxylic acid such as oxalic acid, malonic acid, succinic acid, glutaric acid, adipic acid, maleic acid, fumaric acid, itaconic acid, sebacic acid, phthalic acid, malic acid and tartaric acid, and salts and hydrogen salts thereof; tricaboxylic acid such as citric acid and trimellitic acid, and salts and hydrogen salts thereof; and tetracarboxylic acid such as pyromellitic acid, and salts and hydrogen salts thereof. When an organic acid is used as the reactant, the content (% by mass) of the organic acid in the reaction liquid is preferably 1.0% by mass or more to 50.0% by mass or less based on the total mass of the reaction liquid.

Examples of the cationic resin include resins having structures of primary to tertiary amines and resins having structures of quaternary ammonium salts. Specifically, examples of the cationic resin include resins having structures such as vinylamine, allylamine, vinylimidazole, vinylpyridine, dimethylaminoethyl methacrylate, ethyleneimine, guanidine, diallyldimethylammonium chloride and alkylamine-epichlorohydrin condensate. In order to increase the solubility in the reaction liquid, it is possible to use a cationic resin and an acidic compound in combination or to subject a cationic resin to quaternization treatment. When a cationic resin is used as the reactant, the content (% by mass) of the cationic resin in the reaction liquid is preferably 0.1% by mass or more to 10.0% by mass or less based on the total mass of the reaction liquid.

[Aqueous medium]

The reaction liquid is an aqueous reaction liquid at least containing water as an aqueous medium. The aqueous medium that is used in the reaction liquid can contain the above-described water-soluble organic solvent that can be contained in the ink.

[Other component]

The reaction liquid may contain other components as needed. Examples of the other component include those that are the same as the above-described other components that can be contained in the ink.

[Physical property of reaction liquid]

The reaction liquid that can be suitably used in the recording method of the present invention is an aqueous reaction liquid that is applied to an ink jet system. Accordingly, from the viewpoint of reliability, it is preferable to appropriately control the physical property values. Specifically, the surface tension of the reaction liquid at 25°C is preferably 20 mN/m or more to 60 mN/m or less. The viscosity of the reaction liquid at 25°C is preferably 1.0 mPa·s or more to 10.0 mPa·s or less. The pH of the reaction liquid at 25°C is preferably 5.0 or more to 9.5 or less and further preferably 6.0 or more to 9.0 or less.

EXAMPLES

The present invention will now be described in more detail with reference to EXAMPLES and COMPARATIVE EXAMPLES, but the present invention is not limited in any way by the following EXAMPLES unless it does not exceed the gist. The amounts of components indicated as "part(s)" and "%" are by mass unless otherwise stated. Hereinafter, a dispersion of a particle is also referred to as a pigment dispersion.

<Measurement of physical property value>

(Average primary particle size and volume-based cumulative 50% particle size of particle)

A sample was photographed using a scanning electron microscope (trade name: "S-4700", manufactured by Hitachi High-Tech Corporation) at 100,000× magnification. The diameters of 100 circles respectively circumscribing primary particles were measured, and the average thereof was calculated. The calculated average was defined as the average primary particle size $D_{P0}$ of the particle. The volume-based cumulative 50% particle size $D_P$ of the particle was measured by dynamic light scattering using a particle size analyzer (trade name: "UPA-EX150", manufactured by Nikkiso Co., Ltd.). The volume-based cumulative 50% particle size $D_E$ of a resin particle was also measured using the above particle size analyzer.

(Glass transition temperature and melting point of resin particle)

The glass transition temperature Tg and melting point $T_M$ of a resin particle were measured using a differential scanning calorimeter (DSC). Specifically, a resin particle (2 mg) obtained by drying and solidifying a liquid containing the resin particle at 60°C was put and sealed in an aluminum container to prepare a sample for measurement. The prepared sample was subjected to thermal analysis using a differential scanning calorimeter (trade name: "DSC-2500", manufactured by TA instruments) according to the temperature program shown below. The glass transition temperature of the resin particle in the present specification is defined as below. That is, in a temperature rising curve (horizontal axis: temperature, vertical axis: amount of heat) of the following temperature program (3), the temperature at the intersection of a straight line passing through two points in the curve on the low-temperature side and extending to the high-temperature side and a tangent drawn at the point where the gradient of the step-like change in the curve is maximum is determined. The thus-determined temperature was defined as the "glass transition temperature Tg of the resin particle". Regarding the crystalline resin, the peak top of the absorption peak of the temperature rising curve was defined as the "melting point $T_M$ of the resin particle".

[Temperature program]:

(1) increasing the temperature at a rate of 10°C/min from 20°C to 200°C;
(2) decreasing the temperature at a rate of 5°C/min from 200°C to -50°C; and
(3) increasing the temperature at a rate of 10°C/min from -50°C to 200°C.

(Loss elastic modulus of resin particle)

The loss elastic modulus of the resin particle was measured according to the method shown below. About 10 g of the water dispersion of the resin particle was dropwise added to a fluororesin plate and was placed in a vacuum dryer (trade name: "ADP300", manufactured by Yamato Scientific Co., Ltd.). A sample for measurement was prepared by vacuum drying at 80°C for 30 minutes. The prepared sample was compressed while increasing the temperature, and the loss elastic modulus was measured using a viscoelasticity measuring apparatus (trade name: "Rheogel-E4000", manufactured by UBM). The measurement conditions were set to measurement jig: compression jig $\varphi$ 20, strain wave shape: sine wave, excitation state: continuous excitation, fundamental frequency: 1 Hz, strain control: constant at 3 $\mu$m, start temperature: -20°C, step temperature: 2°C, end temperature: 80°C and temperature-rising rate: 5°C/min.

(Density of particle)

The density of the particle was measured by a Gay-Lussac specific gravity bottle (pycnometer) method in accordance with JIS Z 8807. The density of the resin particle was also measured by the same method.

<Preparation of particle (pigment dispersion)>

Particles (particles 1 to 14) shown in Table 1 were provided, and pigment dispersions 1 to 14 were prepared using the provided particles.

Regarding particles 1 to 3, 7 and 10, the content of the particle was adjusted to 30.0% by adding an appropriate amount of ion-exchanged water or evaporating the liquid component to obtain pigment dispersions 1 to 3, 7 and 10. Regarding particles 4 to 6, 8 and 9, 10.0 parts of one of the particles, 0.8 parts of an acrylic dispersant (trade name: "DISPER BYK-154", manufactured by BYK Chemie GmbH) and 100 parts of 0.1-mm zirconia beads were subjected to dispersion treatment using a bead mill for 6 hours. The zirconia beads were removed by filtration, and an appropriate amount of ion-exchanged water was added to the filtrate as needed to obtain pigment dispersions 4 to 6, 8 and 9.

Tetraethyl orthosilicate (6.3 g) was dissolved in a mixture solvent of ethanol (75.0 g), methanol (25.0 g) and ion-exchanged water (18.0 g) to obtain a solution. A 28% ammonia water (2.2 g) was added to the obtained solution, followed by stirring at 25°C for 24 hours to obtain pigment dispersion 11. Pigment dispersion 12 was obtained as in the pigment dispersion 4 except that the time of dispersion treatment was adjusted such that the $D_P$ (nm) shown in Table 1 is achieved.

Each (30.0 parts) of titanium oxide (particles 13 and 14), potassium hydroxide (0.45 parts), ion-exchanged water (69.55 parts) and 0.1-mm zirconia beads (100 parts) were mixed and were subjected to dispersion treatment using a bead mill. The zirconia beads were removed by filtration, and an appropriate amount of ion-exchanged water was added to the filtrate as needed to obtain pigment dispersions 13 and 14. The time of dispersion treatment was adjusted such that the $D_P$ (nm) shown in Table 1 is achieved.

Pigment dispersions were all appropriately adjusted such that the content of the particle was 30.0%. In Table 1, particles 4 and 12 are cubic calcium carbonate. Particle 5 is hydroxyapatite, which is one type of calcium phosphate. Particle 7 is stabilized zirconia containing a stabilizer. In Table 1, the refractive index of each titanium oxide was 2.5 or more to 2.8 or less. The refractive indices of the particles other than titanium oxide were 1.5 or more to 2.2 or less.

[Table 1]

| Table 1: Type of particle | | | | | | | | | |
|---|---|---|---|---|---|---|---|---|---|
| Particle | $D_{P0}$ (nm) | $D_P$ (nm) | Tg (°C) | $T_M$ (°C) | Density (g/cm³) | Trade name | Manufacturer | Type of material | Surface treatment |
| 1 | 30 | 80 | - | 1,800 | 4.2 | TTO-W-5 | Ishihara Sangyo | Rutile-type titanium oxide | Silica |
| 2 | 20 | 30 | - | 1,800 | 3.9 | Tynock AM-15 | Taki Chemical | Anatase-type titanium oxide | None |

(continued)

| Table 1: Type of particle | | | | | | | | | |
|---|---|---|---|---|---|---|---|---|---|
| Particle | $D_{P0}$ (nm) | $D_P$ (nm) | Tg (°C) | $T_M$ (°C) | Density (g/cm$^3$) | Trade name | Manufacturer | Type of material | Surface treatment |
| 3 | 20 | 60 | - | 1,800 | 3.9 | Tynock A-6 | Taki Chemical | Anatase-type titanium oxide | None |
| 4 | 80 | 124 | - | 825 | 2.7 | Viscal | New Lime | Calcium carbonate | None |
| 5 | 40 | 80 | - | 1,670 | 3.1 | MHS-00405 | SofSera | Calcium phosphate | None |
| 6 | 10 | 145 | - | 1,580 | 4.5 | BARIFINE BF-40 | Sakai Chemical Industry | Barium sulfate | None |
| 7 | 50 | 54 | - | 2,715 | 5.9 | NanoUse ZR-40BL | Nissan Chemical | Zirconium oxide | None |
| 8 | 120 | 145 | - | 1,600 | 2.6 | POLYGLOSS90 | Kamin Solutions | Kaolin | None |
| 9 | 140 | 150 | - | 1,550 | 2.6 | KaminTEK2001 | Kamin Solutions | Clay | None |
| 10 | 20 | 46 | 280 | - | 1.0 | Epostar MX020W | Nippon Shokubai | Acrylic resin particle (Tg: 280°C) | None |
| 11 | 100 | 100 | - | 1,700 | 2.2 | - | - | Silicon dioxide | None |
| 12 | 80 | 197 | - | 825 | 2.7 | Viscal | New Lime | Calcium carbonate | None |
| 13 | 16 | 150 | - | 1,800 | 4.2 | STR-100W | Sakai Chemical Industry | Rutile-type titanium oxide | Silica |
| 14 | 250 | 250 | - | 1,800 | 4.2 | Tipaque CR-80 | Ishihara Sangyo | Rutile-type titanium oxide | Alumina Silica |

<Preparation of resin particle>

Water dispersions of the resin particles shown in Table 2 were prepared. In Table 2, the content of the resin particle in the water dispersion of each resin particle is shown in the column for "Content of resin particle (%)". Water dispersions resin particle 2 and resin particle 3 were respectively prepared by the method shown below.

(Water dispersion of resin particle)

Sebacic acid (300 g) and 1,6-hexanediol (170 g) were mixed and were heated up to 190°C over 1 hour while stirring. Tetrabutyl orthotitanate (0.01 g) was added thereto, and then the inner temperature was increased up to 240°C for polymerization over 6 hours while distilling the generated water to obtain a crystalline polyester resin. The obtained polyester resin had a melting point $T_M$ of 75°C. The obtained polyester resin (50 g) was placed in a 300-mL four-neck flask equipped with a nitrogen introducing pipe, a stirrer and a thermocouple. Methyl ethyl ketone (50 g) was added thereto, followed by heating to 40°C under a nitrogen gas flow to dissolve the polyester resin. Triethylamine (1.2 g) was further added thereto, the mixture was stirred for 1 hour, ion-exchanged water (106 g) was then dropwise added thereto at a rate of 7.5 g/min, and the mixture was stirred for 30 minutes. Subsequently, the methyl ethyl ketone was removed under reduced pressure to obtain a water dispersion of resin particle 2 containing 30.0% the resin particle. The volume-based cumulative 50% particle size $D_E$ of resin particle 2 measured by the above apparatus was 190 nm.

(Water dispersion of resin particle 3)

Sebacic acid (300 g) and 1,6-hexanediol (170 g) were mixed and were heated up to 190°C over 1 hour while stirring. Tetrabutyl orthotitanate (0.01 g) was added thereto, and then the inner temperature was increased up to 240°C over 6 hours for polymerization while distilling the generated water to obtain a crystalline polyester resin. The obtained polyester resin had a melting point $T_M$ of 75°C. The obtained polyester resin (50 g) was placed in a 300-mL four-neck flask equipped with a nitrogen introducing pipe, a stirrer and a thermocouple. Methyl ethyl ketone (50 g) was added thereto, followed by heating to 40°C under a nitrogen gas flow to dissolve the polyester resin. Triethylamine (1.0 g) was further added thereto, the mixture was stirred for 1 hour, ion-exchanged water (106 g) was then dropwise added thereto at a rate of 7.5 g/min, and the mixture was stirred for 30 minutes. Subsequently, the methyl ethyl ketone was removed under reduced pressure to obtain a water dispersion of resin particle 3 containing 30.0% the resin particle. The volume-based cumulative 50% particle size $D_E$ of resin particle 3 measured by the above apparatus was 230 nm.

[Table 2]

Table 2: Type of resin particle

| Resin particle | Type of resin | Trade name | Manufacturer | Crystallinity | $D_E$ (nm) | Tg (°C) | $T_M$ (°C) | Density (g/cm$^3$) | Apparent density (g/cm$^3$) | Loss elastic modulus (Pa) | Content of resin particle (%) |
|---|---|---|---|---|---|---|---|---|---|---|---|
| 1 | Polyurethane resin | SUPERFLEX 860 | DKS | Amorphous | 200 | 36 | - | 1.0 | 1.0 | $9.9 \times 10^4$ | 31.0 |
| 2 | Polyester resin | - | - | Crystalline | 190 | - | 75 | 0.9 | 0.9 | $1.9 \times 10^6$ | 30.0 |
| 3 | Polyester resin | - | - | Crystalline | 230 | - | 75 | 0.9 | 0.9 | $1.2 \times 10^7$ | 30.0 |
| 4 | Polyurethane resin | SUPERFLEX 500M | DKS | Crystalline | 140 | - | 49 | 1.0 | 1.0 | $1.0 \times 10^7$ | 41.0 |
| 5 | Polyester resin | VYLONAL MD-2000 | TOYOBO | Amorphous | 122 | 64 | - | 0.9 | 0.9 | $3.1 \times 10^5$ | 40.0 |
| 6 | Polyurethane resin | SUPERFLEX 210 | DKS | Amorphous | 40 | 41 | - | 1.0 | 1.0 | $4.7 \times 10^4$ | 35.0 |
| 7 | Styrene-acrylic resin | HIROS-X PE-1304 | CHEMIPAZ | Amorphous | 240 | 10 | - | 1.2 | 1.2 | $2.1 \times 10^6$ | 33.0 |
| 8 | Styrene-acrylic resin | Nipol LX816A | Zeon | Amorphous | 140 | -20 | - | 1.2 | 1.2 | $5.2 \times 10^5$ | 42.0 |
| 9 | Polyurethane resin | SUPERFLEX 300 | DKS | Amorphous | 90 | -12 | - | 1.0 | 1.0 | $1.2 \times 10^4$ | 30.0 |
| 10 | Vinyl chloride resin | VINYBLAN 715S | Nissin Chemical Industry | Amorphous | 90 | 25 | - | 1.4 | 1.4 | $2.4 \times 10^6$ | 25.0 |
| 11 | Vinyl chloride resin | VINYBLAN 271 | Nissin Chemical Industry | Amorphous | 614 | -8 | - | 1.4 | 1.4 | $7.3 \times 10^5$ | 43.0 |
| 12 | Silicone resin | KM2002-T-2 | Shin-Etsu Chemical | Amorphous | 269 | 71 | - | 1.0 | 1.0 | $1.9 \times 10^6$ | 40.0 |
| 13 | Polystyrene resin | PS20V | NANO-MIR | Amorphous | 200 | 98 | - | 1.0 | 1.0 | $1.0 \times 10^9$ | 30.0 |
| 14 | Hollow resin | ROPAQUE HP-1055 | Dow Chemical | Amorphous | 1,000 | 106 | - | 1.2 | 0.5 | - | 27.0 |

(Resin particles 15 to 17)

Resin particles 15 to 17 shown below were provided. The densities and apparent densities of the resin particles 15 to 17 were all 1.0 g/cm³.

- Resin particle 15: styrene acrylic resin (trade name: "VINYBLAN 2685", manufactured by Nissin Chemical Industry Co., Ltd., amorphous, average particle size: 210 nm, Tg: 50°C, resin particle content: 30.0%);
- Resin particle 16: styrene acrylic resin (trade name: "Joncryl 450", manufactured by Johnson Polymer LLC, amorphous, average particle size: 90 nm, Tg: 16°C, resin particle content: 42.0%); and
- Resin particle 17: styrene acrylic resin (trade name: "WEM-3000", manufactured by Taisei Fine Chemical Co., Ltd., amorphous, average particle size: 300 nm, Tg: 98°C, resin particle content: 33.0%)

<Preparation of emulsion>

(Emulsion 1)

A fluorine-based nonionic surfactant (0.3 parts, trade name: "Capstone FS-31", manufactured by DuPont de Nemours, Inc.) was dissolved in ion-exchanged water (10.0 parts). Perfluorohexane (4.0 parts) was added thereto, and dispersion treatment was performed using an ultrasonic disperser with a duty cycle of 50% for 4 minutes to obtain emulsion 1 of an O/W-type emulsion.

<Preparation of ink>

Components (unit: %) shown in the upper columns of Tables 3-1 to 3-3 were respectively mixed. Potassium hydroxide was added thereto to adjust the pH within a range of 8 to 9. The resulting solutions were pressure-filtered through a microfilter with a pore size of 3.0 μm (manufactured by FUJIFILM Corporation) to prepare each ink. In Tables 3-1 to 3-3, "Acetylenol E100" is the trade name of a nonionic surfactant (acetylene glycol ethylene oxide adduct) manufactured by Kawaken Fine Chemicals Co., Ltd. The characteristics of the prepared inks are shown in lower columns of Tables 3-1 to 3-3. As shown in Table 3-3, ink 38 was prepared using resin particles 16 and 17 in amounts of 8.3 parts and 10.7 parts, respectively.

[Table 3-1]

| | Ink | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Type of pigment dispersion | 1 | 1 | 1 | 1 | 1 | 1 | 1 | 2 | 3 | 4 | 5 | 6 | 7 |
| Type of resin particle | 1 | 1 | 1 | 2 | 3 | 4 | 5 | 1 | 1 | 1 | 1 | 1 | 1 |
| Pigment dispersion | 43.3 | 33.3 | 48.3 | 43.3 | 43.3 | 43.3 | 43.3 | 40.2 | 40.2 | 27.9 | 32.0 | 46.4 | 60.9 |
| Water dispersion of resin particle | 22.6 | 32.3 | 17.7 | 18.3 | 18.3 | 17.1 | 17.5 | 22.6 | 22.6 | 22.6 | 22.6 | 22.6 | 22.6 |
| Emulsion 1 | | | | | | | | | | | | | |
| Water dispersion of inorganic particle | | | | | | | | | | | | | |
| Glycerin | 2.0 | 2.0 | 2.0 | 2.0 | 2.0 | 2.0 | 2.0 | 2.0 | 2.0 | 2.0 | 2.0 | 2.0 | 2.0 |
| Ethylene glycol | 7.0 | 7.0 | 7.0 | 7.0 | 7.0 | 7.0 | 7.0 | 7.0 | 7.0 | 7.0 | 7.0 | 7.0 | 7.0 |

(continued)

| | Ink | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Acetylenol E100 | 0.5 | 0.5 | 0.5 | 0.5 | 0.5 | 0.5 | 0.5 | 0.5 | 0.5 | 0.5 | 0.5 | 0.5 | 0.5 |
| Ion-exchanged water | 24.6 | 24.9 | 24.5 | 28.9 | 28.9 | 30.1 | 29.7 | 27.7 | 27.7 | 40.0 | 35.9 | 21.5 | 7.0 |
| Content $V_P$ (% by volume of particle) | 3.1 | 2.4 | 3.5 | 3.1 | 3.1 | 3.1 | 3.1 | 3.1 | 3.1 | 3.1 | 3.1 | 3.1 | 3.1 |
| Content $V_E$ (% by volume) of first resin particle | 7.0 | 10.0 | 5.5 | 6.1 | 6.1 | 7.0 | 7.8 | 7.0 | 7.0 | 7.0 | 7.0 | 7.0 | 7.0 |
| Value (times) of $V_E/V_P$ | 2.3 | 4.2 | 1.6 | 2.0 | 2.0 | 2.3 | 2.5 | 2.3 | 2.3 | 2.3 | 2.3 | 2.3 | 2.3 |
| Content T (%) of titanium oxide particle | 13.0 | 10.0 | 14.5 | 13.0 | 13.0 | 13.0 | 13.0 | 12.1 | 12.1 | 0.0 | 0.0 | 0.0 | 0.0 |
| Content E (%) of first resin particle | 7.0 | 10.0 | 5.5 | 5.5 | 5.5 | 7.0 | 7.0 | 7.0 | 7.0 | 7.0 | 7.0 | 7.0 | 7.0 |
| Value (times) of E/T | 0.54 | 1.0 | 0.38 | 0.42 | 0.42 | 0.54 | 0.54 | 0.58 | 0.58 | - | - | - | - |

[Table 3-2]

| | Ink | | | | | | | | | | | | |
|---|---|---|---|---|---|---|---|---|---|---|---|---|---|
| | 14 | 15 | 16 | 17 | 18 | 19 | 20 | 21 | 22 | 23 | 24 | 25 | 26 |
| Type of pigment dispersion | 8 | 9 | 10 | 11 | 1 | 1 | 1 | 1 | 1 | 1 | 1 | 1 | 1 |
| Type of resin particle | 1 | 1 | 1 | 1 | 6 | 1 | 1 | 7 | 8 | 9 | 10 | 11 | 12 |
| Pigment dispersion | 26.8 | 26.8 | 10.3 | 22.7 | 43.3 | 53.3 | 28.3 | 48.3 | 48.3 | 48.3 | 43.3 | 43.3 | 43.3 |
| Water dispersion of resin particle | 22.6 | 22.6 | 22.6 | 22.6 | 22.6 | 12.9 | 38.0 | 16.7 | 14.0 | 18.3 | 28.0 | 16.3 | 17.5 |
| Emulsion 1 | | | | | | | | | | | | | |

(continued)

| | Ink | | | | | | | | | | | | |
|---|---|---|---|---|---|---|---|---|---|---|---|---|---|
| | 14 | 15 | 16 | 17 | 18 | 19 | 20 | 21 | 22 | 23 | 24 | 25 | 26 |
| Water dispersion of inorganic particle | | | | | | | | | | | | | |
| Glycerin | 2.0 | 2.0 | 2.0 | 2.0 | 2.0 | 2.0 | 2.0 | 2.0 | 2.0 | 2.0 | 2.0 | 2.0 | 2.0 |
| Ethylene glycol | 7.0 | 7.0 | 7.0 | 7.0 | 7.0 | 7.0 | 7.0 | 7.0 | 7.0 | 7.0 | 7.0 | 7.0 | 7.0 |
| Acetylenol E100 | 0.5 | 0.5 | 0.5 | 0.5 | 0.5 | 0.5 | 0.5 | 0.5 | 0.5 | 0.5 | 0.5 | 0.5 | 0.5 |
| Ion-exchanged water | 41.1 | 41.1 | 57.6 | 45.2 | 24.6 | 24.3 | 24.2 | 25.5 | 28.2 | 23.9 | 19.2 | 30.9 | 29.7 |
| Content $V_P$ (% by volume of particle) | 3.1 | 3.1 | 3.1 | 3.1 | 3.1 | 3.8 | 2.0 | 3.5 | 3.5 | 3.5 | 3.1 | 3.1 | 3.1 |
| Content $V_E$ (% by volume) of first resin particle | 7.0 | 7.0 | 7.0 | 7.0 | 7.9 | 4.0 | 11.8 | 4.6 | 4.9 | 5.5 | 5.0 | 5.0 | 7.0 |
| Value (times) of $V_E/V_P$ | 2.3 | 2.3 | 2.3 | 2.3 | 2.5 | 1.1 | 5.9 | 1.3 | 1.4 | 1.6 | 1.6 | 1.6 | 2.3 |
| Content T (%) of titanium oxide particle | 0.0 | 0.0 | 0.0 | 0.0 | 13.0 | 16.0 | 8.5 | 14.5 | 14.5 | 14.5 | 13.0 | 13.0 | 13.0 |
| Content E (%) of first resin particle | 7.0 | 7.0 | 7.0 | 7.0 | 7.9 | 4.0 | 11.8 | 5.5 | 5.9 | 5.5 | 7.0 | 7.0 | 7.0 |
| Value (times) of E/T) | - | - | - | - | 0.61 | 0.25 | 1.4 | 0.38 | 0.41 | 0.38 | 0.54 | 0.54 | 0.54 |

[Table 3-3]

| | Ink | | | | | | | | | | | |
|---|---|---|---|---|---|---|---|---|---|---|---|---|
| | 27 | 28 | 29 | 30 | 31 | 32 | 33 | 34 | 35 | 36 | 37 | 38 |
| Type of pigment dispersion | 12 | 13 | 1 | 1 | 1 | 14 | 1 | 1 | 1 | 1 | 13 | 13 |
| Type of resin particle | 1 | 1 | 1 | 1 | 1 | 1 | 13 | 14 | - | - | 15 | 16 17 |
| Pigment dispersion | 43.3 | 43.3 | 20.0 | 21.0 | 69.0 | 43.3 | 43.3 | 43.3 | 43.3 | 43.3 | 23.3 | 16.7 |

(continued)

| | Ink | | | | | | | | | | | |
|---|---|---|---|---|---|---|---|---|---|---|---|---|
| | 27 | 28 | 29 | 30 | 31 | 32 | 33 | 34 | 35 | 36 | 37 | 38 |
| Water dispersion of resin particle | 22.6 | 22.6 | 15.0 | 15.0 | 20.0 | 22.6 | 23.3 | 22.6 | | | 50.0 | 8.3 10.7 |
| Emulsion 1 | | | | | | | | | 23.3 | | | |
| Water dispersion of inorganic particle | | | | | | | | | | 23.3 | | |
| Glycerin | 2.0 | 2.0 | 2.0 | 2.0 | 2.0 | 2.0 | 2.0 | 2.0 | 2.0 | 2.0 | 2.0 | 2.0 |
| Ethylene glycol | 7.0 | 7.0 | 7.0 | 7.0 | 7.0 | 7.0 | 7.0 | 7.0 | 7.0 | 7.0 | 7.0 | 7.0 |
| Acetylenol E100 | 0.5 | 0.5 | 0.5 | 0.5 | 0.5 | 0.5 | 0.5 | 0.5 | 0.5 | 0.5 | 0.5 | 0.5 |
| Ion-exchanged water | 24.6 | 24.6 | 55.5 | 54.5 | 1.5 | 24.6 | 23.9 | 24.6 | 23.9 | 23.9 | 17.2 | 54.8 |
| Content $V_P$ (% by volume of particle) | 4.8 | 3.1 | 1.4 | 1.5 | 4.9 | 3.1 | 3.1 | 3.1 | 3.1 | 3.1 | 1.7 | 1.2 |
| Content $V_E$ (% by volume) of first resin particle | 7.0 | 7.0 | 4.7 | 4.7 | 6.2 | 7.0 | 7.0 | 5.1 | 0.0 | 0.0 | 15.0 | 7.0 |
| Value (times) of $V_E/V_P$ | 1.5 | 2.3 | 3.4 | 3.1 | 1.3 | 2.3 | 2.3 | 1.6 | 0.0 | 0.0 | 8.8 | 5.8 |
| Content T (%) of titanium oxide particle | 0.0 | 13.0 | 6.0 | 6.3 | 20.7 | 13.0 | 13.0 | 13.0 | 13.0 | 13.0 | 7.0 | 5.0 |
| Content E (%) of first resin particle | 7.0 | 7.0 | 4.7 | 4.7 | 6.2 | 7.0 | 7.0 | 6.1 | 0.0 | 0.0 | 15.0 | 7.0 |
| Value (times) of E/T) | - | 0.54 | 0.78 | 0.74 | 0.30 | 0.54 | 0.54 | 0.47 | 0.00 | 0.00 | 2.2 | 1.4 |

<Preparation of reaction liquid>

(Reaction liquid 1)

Magnesium sulfate heptahydrate (10.0 parts), glycerin (2.0 parts), ethylene glycol (7.0 parts), a nonionic surfactant (0.5 parts, trade name "Acetylenol E100", manufactured by Kawaken Fine Chemicals Co., Ltd.) and ion-exchanged water were mixed to obtain reaction liquid 1. The amount of ion-exchanged water were appropriately controlled such that the total of the components was 100.0 parts.

(Reaction liquid 2)

A cationic resin (37.0 parts), glycerin (2.0 parts), ethylene glycol (7.0 parts), Acetylenol E100 (0.5 parts) and ion-exchanged water (53.5 parts) were mixed to obtain reaction liquid 2. The cationic resin used was trade name "UNISENCE FPA100L" (manufactured by SENKA Corporation, cationic resin content: 27.0%).

(Reaction liquid 3)

Succinic acid (10.0 parts), glycerin (2.0 parts), ethylene glycol (7.0 parts), Acetylenol E100 (0.5 parts) and ion-exchanged water (81.5 parts) were mixed to obtain reaction liquid 3.

<Evaluation>

The obtained inks were evaluated for the following items. In the present invention, in the evaluation criteria for the items shown below, "AA", "A" and "B" are defined as acceptable levels, and "C" was defined as an unacceptable level. The evaluation results are shown on the right side of Table 4.

(Recording of image for evaluation)

An ink jet recording apparatus (trade name "PIXUS PRO-10S", manufactured by CANON KABUSHIKI KAISHA) equipped with a recording head that ejects a liquid by the action of thermal energy was provided. The ink cartridge was filled with the ink shown on the left side of Table 4 and was set to the provided ink jet recording apparatus. In the present embodiment, the recording duty of a solid image recorded under the following conditions is defined as 100%: eight ink droplets each having a mass per droplet of 3.5 ng are applied to a unit region of 1/600 inch × 1/600 inch at a resolution of 600 dpi × 600 dpi. An image (50 mm × 50 mm) of a recording duty of 400% was recorded on a recording medium using this ink jet recording apparatus by discharging the ink from the ejection orifices in the lower half of the recording head in the longitudinal direction. The recording medium used was a PET film (trade name "LLRPCF1372", manufactured by Sakurai Co., Ltd., the water absorption amount from the start of contact to 30 msec$^{1/2}$ is within a range of 0 mL/m$^2$ or more to 10 mL/m$^2$ or less in a Bristow method) cut into an A4 size.

In Table 4, in the examples in which the reaction liquid application step is "present", the ink cartridge was filled with the respective reaction liquids shown in Table 4, and the ink and the reaction liquid were simultaneously applied to a recording medium. The recording duty of the reaction liquid was adjusted to 40%. The reaction liquids with the numbers shown in the column for the reaction liquid application step were used. In Table 4, in the examples of the drying step "Present", the recording medium was transported by a length corresponding to a half of the recording head in the longitudinal direction, and the image was then dried by blowing hot air of 25°C for 5 minutes. The temperature of the hot air is the temperature at the hot air outlet measured using a mold surface sensor (trade name "MF-O-K", manufactured by Toa Electric Inc.).

Subsequently, in Table 4, in the examples of the heating step "1", the recording medium on which an image was recorded was heat-treated in a thermostat chamber of 100°C for 5 minutes to fix the image on the recording medium. The heating temperature $T_H$ on this occasion was 80°C or more to 100°C or less. In the example of the heating step "2", the image was fixed to the recording medium as in the above-described heating step "1" except that the temperature of the thermostat chamber was set to 80°C. The heating temperature $T_H$ on this occasion was 70°C or more to less than 80°C. The heating by the thermostat chamber corresponds to the heating of the recording surface and back surface with an infrared heater. In EXAMPLES 21, 37 and 38, the ink and the reaction liquid were simultaneously applied, and the drying step and the heating step were performed in this order.

In the example of the heating step "3", the recording medium was transported by a length corresponding to a half of the recording head in the longitudinal direction, and the image was then dried by blowing hot air of 90°C at an air velocity of 11 m/s for 1 minute. The heating temperature $T_H$ on this occasion was about 90°C. In the example of the heating step "4", the recording medium was transported by a length corresponding to a half of the recording head in the longitudinal direction, and the image was then dried by blowing hot air of 110°C at an air velocity of 15 m/s for 10 seconds. The heating temperature $T_H$ on this occasion was about 90°C.

(Formation of hole)

Whether the resin particle melted and holes were generated or not were judged by the following method. A part of the recording medium to which an ink was applied was cut before and after the heating step, and the cross-sections were observed with a scanning electron microscope. When the resin particle was observed in the cross-section before the heating step, the particle size was measured. When the hole was observed in the cross-section after the heating step, the hole size was measured. When the difference between the measured hole size and resin particle size was 10% or less, it was judged that the resin particle melted in the heating step and that holes were generated. The results of this evaluation are shown in the column for "Hole formation" in Table 4.

(Concealing property)

The contrast ratio of the recorded image for evaluation was measured and calculated according to the method in accordance with ISO 2471: 2008, and the concealing property of the image was evaluated. The ink prepared in each EXAMPLE was a white ink. In ISO 2471: 2008, the paper for the test was backed with a white plate or a black plate to measure the respective reflectance, and the contrast ratio was calculated by the following formula (B):

$$\text{Contrast ratio} = (R_0/R_\infty) \times 100 \quad (B)$$

$R_0$: reflectance measured when backed with the black plate; and
$R_\infty$: reflectance measured when backed with the white plate.

In the present EXAMPLE, in accordance with this method, the contrast ratio of the recorded image was measured and calculated using contrast ratio test paper (manufactured by TP Giken Co., Ltd., certified by Japan Paint Inspection and testing Association). The concealing property of each image was evaluated by the evaluation criteria shown below:

AA: the contrast ratio was 60% or more;
A: the contrast ratio was 55% or more to less than 60%;
B: the contrast ratio was 45% or more to less than 55%; and
C: the contrast ratio was less than 45%.

(Settlement resistance)

The prepared ink was placed in a cylindrical sample container to a height of 24 mm and was placed in an environment of 25°C for 1 week. The thickness (mm) of the transparent portion of the supernatant after the placement was measured, and the settlement resistance of the ink was evaluated according to the evaluation criteria shown below:

A: the thickness of transparent portion of the supernatant was 2 mm or less;
B: the thickness of transparent portion of the supernatant was more than 2 mm to 10 mm or less; and
C: the thickness of transparent portion of the supernatant was more than 10 mm.

[Table 4]

| Table 4: Evaluation conditions and evaluation results | | | | | | | | |
|---|---|---|---|---|---|---|---|---|
| | | Evaluation conditions | | | | Evaluation results | | |
| | | Type of nk | Drying step | Reaction liquid application step | Heating step | Hole formation | Concealing property | Settlement resistance |
| | 1 | 1 | Present | Absent | 1 | Yes | AA | A |
| | 2 | 2 | Present | Absent | 1 | Yes | AA | A |
| | 3 | 3 | Present | Absent | 1 | Yes | AA | A |
| | 4 | 4 | Present | Absent | 1 | Yes | A | A |
| | 5 | 3 | Present | Absent | 1 | Yes | A | A |
| | 6 | 3 | Present | Absent | 1 | Yes | A | A |
| | 7 | 7 | Present | Absent | 1 | Yes | AA | A |
| | 8 | 3 | Present | Absent | 1 | Yes | AA | A |
| | 9 | 9 | Present | Absent | 1 | Yes | AA | A |
| | 10 | 10 | Present | Absent | 1 | Yes | A | A |
| | 11 | 11 | Present | Absent | 1 | Yes | A | A |
| | 12 | 12 | Present | Absent | 1 | Yes | A | A |

(continued)

| Table 4: Evaluation conditions and evaluation results | | | | | | | | |
|---|---|---|---|---|---|---|---|---|
| | | Evaluation conditions | | | | Evaluation results | | |
| | | Type of nk | Drying step | Reaction liquid application step | Heating step | Hole formation | Concealing property | Settlement resistance |
| Example | 13 | 13 | Present | Absent | 1 | Yes | A | A |
| | 14 | 14 | Present | Absent | 1 | Yes | A | A |
| | 15 | 15 | Present | Absent | 1 | Yes | A | A |
| | 16 | 16 | Present | Absent | 1 | Yes | A | A |
| | 17 | 17 | Present | Absent | 1 | Yes | A | A |
| | 18 | 1 | Absent | 1 | 1 | Yes | AA | A |
| | 19 | 1 | Absent | 2 | 1 | Yes | AA | A |
| | 20 | 1 | Absent | 3 | 1 | Yes | AA | A |
| | 21 | 1 | Present | 1 | 1 | Yes | AA | A |
| | 22 | 18 | Present | Absent | 1 | Yes | A | A |
| | 23 | 19 | Present | Absent | 1 | Yes | A | A |
| | 24 | 20 | Present | Absent | 1 | Yes | A | A |
| | 25 | 21 | Present | Absent | 1 | Yes | A | A |
| | 26 | 22 | Present | Absent | 1 | Yes | A | A |
| | 27 | 23 | Present | Absent | 1 | Yes | B | A |
| | 28 | 24 | Present | Absent | 1 | Yes | B | A |
| | 29 | 25 | Present | Absent | 1 | Yes | B | A |
| | 30 | 26 | Present | Absent | 1 | Yes | A | A |
| | 31 | 27 | Present | Absent | 1 | Yes | A | B |
| | 32 | 28 | Present | Absent | 1 | Yes | A | B |
| | 33 | 29 | Present | Absent | 1 | Yes | A | A |
| | 34 | 30 | Present | Absent | 1 | Yes | AA | A |
| | 35 | 31 | Present | Absent | 1 | Yes | AA | A |
| | 36 | 1 | Present | Absent | 2 | Yes | A | A |
| | 37 | 1 | Present | 1 | 3 | Yes | AA | A |
| | 38 | 1 | Present | 1 | 4 | Yes | AA | A |
| | 39 | 1 | Absent | Absent | 1 | Yes | A | A |
| Comparative Example | 1 | 32 | Present | Absent | 1 | Yes | C | C |
| | 2 | 1 | Present | Absent | None | No | C | A |
| | 3 | 33 | Present | Absent | 1 | No | C | B |
| | 4 | 34 | Present | Absent | 4 | No | C | A |
| | 5 | 35 | Present | Absent | 1 | No | C | A |
| | 6 | 36 | Present | Absent | 1 | No | C | B |
| | 7 | 37 | Present | Absent | 1 | No | C | B |
| | 8 | 38 | Present | Absent | 1 | No | C | B |

**EP 4 696 519 A1**

The evaluation results of concealing property of the images in EXAMPLES 25 and 26 were "A" as in those in EXAMPLES 4 to 6, but the property was more excellent in EXAMPLES 4 to 6. The evaluation result of concealing property of the image in EXAMPLE 29 was "B" as in those in EXAMPLES 27 and 28, but the property was more excellent in EXAMPLES 27 and 28. The evaluation results of concealing property of the image in EXAMPLE 31 was "A" as in that in EXAMPLE 32, but the property was more excellent in EXAMPLE 32.

The present invention was not limited to the above embodiments and can be variously changed and modified without departing from the spirit and scope of the present invention. Accordingly, in order to make the scope of the present invention public, the following claims are appended.

This application claims the benefit of Japanese Patent Application No. 2023-084008 filed May 22, 2023 and No. 2024-062310 filed April 8, 2024, which are hereby incorporated by reference herein in their entirety.

Reference Signs List

1    particle
2    first resin particle
3    binder
4    hole

**Claims**

1.  An ink jet recording method of recording an image on a recording medium using an aqueous ink comprising a particle and a first resin particle, comprising:

    an ink application step of applying the aqueous ink to the recording medium; and
    a heating step of heating the recording medium applied with the aqueous ink to a temperature that is equal to or higher than glass transition temperature Tg (°C) or melting point $T_M$ (°C) of the first resin particle and is less than glass transition temperature Tg (°C) or melting point $T_M$ (°C) of the particle, wherein
    the particle has an average primary particle size $D_{P0}$ (nm) of 150 nm or less, and
    in the heating step, the recording medium is heated to melt the first resin particle and to generate a hole.

2.  The ink jet recording method according to claim 1, wherein the first resin particle has a volume-based cumulative 50% particle size $D_E$ (nm) of 100 nm or more to 400 nm or less.

3.  The ink jet recording method according to claim 1, wherein in the aqueous ink, volume ratio of content (% by volume) of the first resin particle to content (% by volume) of the particle is 1.3 times or more to 5.0 times or less.

4.  The ink jet recording method according to claim 1, wherein the first resin particle has a glass transition temperature Tg (°C) of 25°C or more.

5.  The ink jet recording method according to claim 1, wherein

    the first resin particle has a melting point $T_M$ (°C) of 25°C or more, and
    a resin constituting the first resin particle is a crystalline resin.

6.  The ink jet recording method according to claim 1, wherein the first resin particle has a loss elastic modulus at 80°C of $1.2 \times 10^7$ Pa or less.

7.  The ink jet recording method according to claim 1, wherein the first resin particle has a loss elastic modulus at 80°C of $3.3 \times 10^5$ Pa or less.

8.  The ink jet recording method according to claim 1, wherein a resin constituting the first resin particle comprises at least one selected from the group consisting of an acrylic resin, a polyester resin and a urethane resin.

9.  The ink jet recording method according to claim 1, wherein the first resin particle has an apparent density of 0.8 g/cm$^3$ or more.

10. The ink jet recording method according to claim 1, wherein the particle has a volume-based cumulative 50% particle size $D_P$ (nm) of 150 nm or less.

11. The ink jet recording method according to claim 1, wherein the particle comprises at least one selected from the group consisting of titanium oxide, calcium carbonate, calcium phosphate, barium sulfate, zirconium oxide, silicon dioxide, kaolin, clay and a second resin particle.

12. The ink jet recording method according to claim 1, wherein

the particle comprises titanium oxide; and
in the aqueous ink, mass ratio of content (% by mass) of the first resin particle to content (% by mass) of the titanium oxide is 0.30 times or more to 1.0 times or less.

13. The ink jet recording method according to claim 12, wherein the titanium oxide has a volume-based cumulative 50% particle size $D_P$ (nm) of 100 nm or less.

14. The ink jet recording method according to any one of claims 1 to 13, wherein in the aqueous ink, content (% by volume) of the particle is 1.5% by volume or more based on the total volume of the ink.

15. The ink jet recording method according to any one of claims 1 to 13, wherein the heating temperature $T_H$ (°C) in the heating step is 80°C or more.

16. The ink jet recording method according to any one of claims 1 to 13, further comprising at least one step selected from the group consisting of a reaction liquid application step of applying an aqueous reaction liquid comprising a reactant that reacts with the aqueous ink to the recording medium and a drying step of drying the liquid component on the recording medium.

17. The ink jet recording method according to any one of claims 1 to 13, wherein the aqueous ink is a white ink.

18. An ink jet recording apparatus that is used in an ink jet recording method of recording an image on a recording medium using an aqueous ink comprising a particle and a first resin particle, comprising:

an ink application means for applying the aqueous ink to the recording medium; and
a heating means for heating the recording medium applied with the aqueous ink to a temperature that is equal to or higher than glass transition temperature Tg (°C) or melting point $T_M$ (°C) of the first resin particle and is less than glass transition temperature Tg (°C) or melting point $T_M$ (°C) of the particle, wherein
the particle has an average primary particle size $D_{P0}$ (nm) of 150 nm or less, and
the heating means is a means for heating the recording medium to melt the first resin particle and to generate a hole.

19. An aqueous ink that is used in an ink jet recording method of recording an image on a recording medium using an aqueous ink comprising a particle and a first resin particle, wherein

the ink jet recording method includes an ink application step of applying the aqueous ink to the recording medium, and
a heating step of heating the recording medium applied with the aqueous ink to a temperature that is equal to or higher than glass transition temperature Tg (°C) or melting point $T_M$ (°C) of the first resin particle and is less than glass transition temperature Tg (°C) or melting point $T_M$ (°C) of the particle;
the particle has an average primary particle size $D_{P0}$ (nm) of 150 nm or less; and
in the heating step, the recording medium is heated to melt the first resin particle and to generate a hole.

FIG. 1

FIG. 2

# FIG. 3

# FIG. 4

## INTERNATIONAL SEARCH REPORT

| International application No. |
|---|
| **PCT/JP2024/018255** |

| A. | CLASSIFICATION OF SUBJECT MATTER |
|---|---|

*B41M 5/00*(2006.01)i; *B41J 2/01*(2006.01)i; *B41J 2/21*(2006.01)i; *C09D 11/322*(2014.01)i; *C09D 11/54*(2014.01)i
FI: B41M5/00 100; B41J2/01 123; B41J2/01 125; B41J2/01 501; B41J2/21; B41M5/00 120; B41M5/00 132; C09D11/322; C09D11/54

According to International Patent Classification (IPC) or to both national classification and IPC

| B. | FIELDS SEARCHED |
|---|---|

Minimum documentation searched (classification system followed by classification symbols)

B41M5/00; B41J2/01; B41J2/21; C09D11/322; C09D11/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-023352 A (RICOH COMPANY, LTD.) 08 February 2022 (2022-02-08) claims, examples | 1-19 |
| X | JP 2021-102343 A (RICOH COMPANY, LTD.) 15 July 2021 (2021-07-15) claims, examples | 1-19 |
| A | JP 2017-210528 A (RICOH COMPANY, LTD.) 30 November 2017 (2017-11-30) | 1-19 |
| A | JP 2023-017918 A (RICOH COMPANY, LTD.) 07 February 2023 (2023-02-07) | 1-19 |
| A | JP 2020-169232 A (RICOH COMPANY, LTD.) 15 October 2020 (2020-10-15) | 1-19 |
| A | JP 2022-135921 A (RICOH COMPANY, LTD.) 15 September 2022 (2022-09-15) | 1-19 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/018255**

| Patent document cited in search report | | | Publication date (day/month/year) | Patent family member(s) | | | Publication date (day/month/year) |
|---|---|---|---|---|---|---|---|
| JP | 2022-023352 | A | 08 February 2022 | US | 2022/0024220 | A1 | |
| | | | | claims, examples | | | |
| JP | 2021-102343 | A | 15 July 2021 | JP | 2018-192779 | A | |
| | | | | US | 2018/0001669 | A1 | |
| | | | | claims, examples | | | |
| JP | 2017-210528 | A | 30 November 2017 | (Family: none) | | | |
| JP | 2023-017918 | A | 07 February 2023 | JP | 2019-177553 | A | |
| | | | | US | 2019/0299692 | A1 | |
| JP | 2020-169232 | A | 15 October 2020 | US | 2020/0307246 | A1 | |
| JP | 2022-135921 | A | 15 September 2022 | WO | 2022/185157 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013060513 A
- JP 2023084008 A
- JP 2024 A
- JP 062310 A